# FASCICULE DE BREVET EUROPEEN

(11) **EP 0 446 547 B1**
(45) Date de publication et mention de la délivrance du brevet: **02.03.1994**
(21) Numéro de dépôt: 90403767.8
(22) Date de dépôt: 26.12.1990
(51) Int. Cl.: G01B 13/00, G01D 5/42

(54) **Dispostif de mesure pneumatique**
Pneumatische Messeinrichtung
Pneumatic measuring device

(30) Priorité: 22.01.1990 FR 9000687
(43) Date de publication de la demande: 18.09.1991
(73) Titulaire: SOCIETE INDUSTRIELLE DE LIAISONS ELECTRIQUES - SILEC, F-75008 Paris (FR)
(72) Inventeur: Decool, François, F-14400 Bayeux (FR); Legrand, Jacques, F-14400 Bayeux (FR)
(74) Mandataire: Fruchard, Guy

(56) Documents cités:
- DE-A- 3 200 507
- US-A- 4 550 592
- PATENT ABSTRACTS OF JAPAN, vol. 7, no. 245 (P-233)(1390), 29 octobre 1983, & JP-A-58132618

## Description

La présente invention concerne un dispositif de mesure pneumatique.

On connaît des dispositifs de mesure pneumatique utilisant la mesure d'une pression pour déterminer la distance entre une buse de mesure du dispositif et une paroi en regard, cette distance étant elle-même représentative de la dimension d'une pièce à contrôler. Dans le cas le plus courant, un dispositif de mesure pneumatique comporte deux branches de mesure raccordées à une alimentation commune, chaque branche comportant une chambre de mesure alimentée en gaz sous pression par l'intermédiaire d'un gicleur d'alimentation, une buse de sortie espacée du gicleur d'alimentation et une prise de pression disposée entre le gicleur d'alimentation et la buse de sortie. Les prises de pression des deux branches de sortie sont reliées à un manomètre différentiel, l'une des branches de mesure ayant une buse de sortie à section de fuite fixe ou réglable pour servir de branche de référence tandis que l'autre branche de mesure comporte une buse de mesure engendrant une section de fuite variable en fonction de la distance de l'objet à mesurer par rapport à la buse de mesure. Dans les cas où la pression d'alimentation est particulièrement stable, on peut se contenter d'utiliser une seule branche de mesure équipée d'une buse de mesure. Dans un cas comme dans l'autre, et comme décrit en particulier dans le document US-A-4,550,592, le conduit de prise de pression s'étend perpendiculairement à la paroi de la chambre de mesure dans laquelle il débouche et on a constaté que pour effectuer une mesure de pression sans bruit excessif, c'est à dire sans que celle-ci soit influencée de façon excessive par des perturbations résultant de l'écoulement du gaz dans la chambre de mesure et n'ayant aucun rapport avec la distance entre la buse de mesure et l'objet à mesurer, il était nécessaire de prévoir entre le gicleur d'alimentation et la prise de pression une distance de l'ordre de 30 à 100 fois le diamètre du gicleur d'alimentation, soit à une distance de 42 à 140 mm pour un gicleur d'alimentation couramment utilisé ayant un diamètre de 1,4 mm. Une telle contrainte est extrêmement pénalisante du point de vue de l'encombrement du dispositif de mesure.

Un but de l'invention est de proposer un dispositif de mesure d'encombrement réduit.

En vue de la réalisation de ce but, on propose selon l'invention un dispositif de mesure pneumatique comportant au moins une chambre de mesure alimentée en gaz sous pression par l'intermédiaire d'un gicleur d'alimentation, cette chambre de mesure ayant une buse de sortie espacée du gicleur d'alimentation et comprenant une prise de pression disposée entre le gicleur d'alimentation et la buse de sortie sur une paroi de la chambre de mesure s'étendant sensiblement parallèlement à une direction d'écoulement du gaz dans la chambre de mesure, ce dispositif comportant une cloison séparatrice s'étendant à l'intérieur de la chambre de mesure en regard de la prise de pression et déterminant avec la paroi de la chambre de mesure un volume fermé de façon étanche du côté de la buse de sortie et ouvert du côté du gicleur d'admission à proximité de celui-ci.

Ainsi, on a constaté qu'on isolait la prise de pression des perturbations provoquées par l'écoulement du gaz dans la chambre de mesure et qu'il était alors possible de rapprocher sensiblement la prise de pression du gicleur d'admission et de diminuer de façon correspondante les dimensions de la chambre de mesure.

Selon une version avantageuse de l'invention, dans laquelle la chambre de mesure est cylindrique, la cloison séparatrice est tubulaire et limite un volume annulaire. De préférence la cloison séparatrice est montée de façon amovible à l'intérieur de la chambre de mesure. Ainsi, la cloison séparatrice est réalisée de façon très peu onéreuse et son caractère amovible permet d'adapter très facilement le dispositif de mesure aux caractéristiques du gicleur d'alimentation et de la buse de sortie.

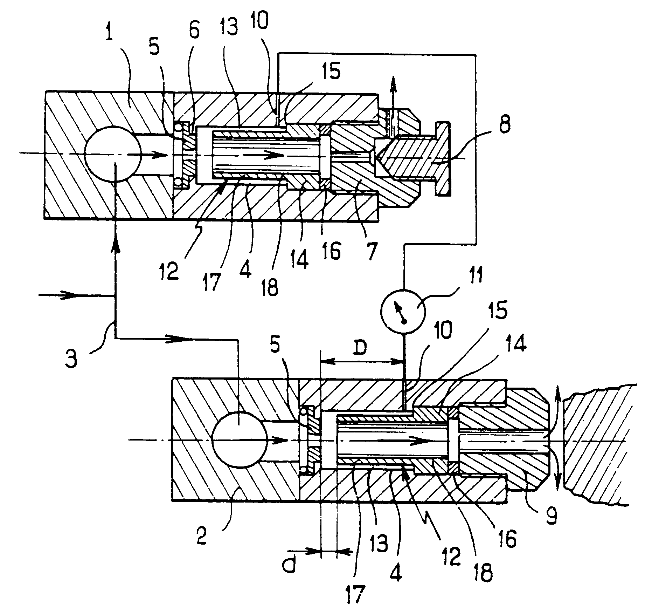

D'autres caractéristiques et avantages de l'invention apparaîtront à la lecture de la description qui suit d'un exemple de réalisation particulier non limitatif de l'invention en liaison avec la figure unique ci-jointe qui représente de façon partiellement schématique un dispositif de mesure comportant deux chambres de mesure selon l'invention représentées selon une coupe axiale.

En référence à la figure, le dispositif de mesure pneumatique selon l'invention comporte deux branches de mesure 1 et 2 reliées à une canalisation commune 3 d'alimentation d'un gaz sous pression. Chaque branche de mesure comporte une chambre de mesure 4 reliée a la canalisation d'alimentation 3 par l'intermédiaire d'un gicleur d'alimentation 5 maintenu centré par rapport à la chambre de mesure 4 par un rebord circulaire 6 sur lequel il prend appui. La chambre de mesure 4 a de préférence une paroi cylindrique coaxiale avec le gicleur d'alimentation 5 et, à son extrémité opposée au gicleur d'alimentation 5, elle comporte une buse de sortie. Dans le cas de la branche de mesure 1, la buse de sortie 7 est une buse de référence comportant une vis pointeau 8 permettant de régler le débit de fuite de la buse de sortie tandis que pour la branche de mesure 2 servant a la mesure proprement dite, la chambre de mesure 4 est équipée d'une buse de mesure 9.

Une prise de pression 10 est réalisée par un perçage de la paroi latérale de la chambre de mesure 4 qui s'étend parallèlement à une direction d'écoulement du gaz dans cette chambre de mesure. Le perçage 10 s'étend sensiblement perpendiculairement à la paroi et débouche dans la chambre de mesure 4 à une distance D de la face du gicleur d'alimentation tournée vers la chambre de mesure 4. C'est cette distance D qui doit habituellement être comprise entre 30 et 100 fois le diamètre du gicleur d'alimentation. Les prises de pression 10 de la branche de référence 1 et de la branche de mesure 2 sont reliées à un manomètre différentiel 11.

Une douille tubulaire 12 est disposée dans chaque chambre de mesure 4 pour réaliser une cloison séparatrice s'étendant en regard de la prise de pression 10 et déterminant avec la paroi de la chambre de mesure un volume 13 fermé de façon étanche du côté de la buse de sortie et ouvert du côté du gicleur d'admission à proximité de celui-ci.

Dans le mode de réalisation préféré illustré, la douille 12 est amovible. Elle comporte une première partie cylindrique 14 qui prend appui sur un épaulement 15 de la chambre de mesure 4 et est maintenue appliquée de façon étanche sur celui-ci par un joint 16 comprimé par la buse de sortie vissée dans le corps de la chambre. Au-delà de l'épaulement 15 vers le gicleur d'alimentation, la douille 12 comporte une partie cylindrique 17 ayant un diamètre extérieur légèrement inférieur au diamètre intérieur de la chambre de mesure 4. La partie 17 s'étend jusqu'à une distance d de la paroi du gicleur d'alimentation 5 tournée vers la chambre de mesure 4. La douille 12 comporte un alésage central 18 cylindrique la traversant sur toute sa longueur.

A titre d'exemple particulier non limitatif, le dispositif selon l'invention a été réalisé avec une chambre de mesure ayant un diamètre interne de 8 mm dans la partie adjacente au gicleur d'admission, un gicleur d'admission ayant un diamètre de 1,22 mm, une douille 12 ayant, dans sa partie en regard de la prise de pression 10, un diamètre extérieur de 7,2 mm et un diamètre intérieur de 6 mm, cette douille s'étendant jusqu'à une distance d de la face du gicleur égale à 3 mm. Pour une pression d'alimentation de 300 kPa et une pression dans la chambre de mesure de l'ordre de 200 kPa, on a obtenu avec le dispositif de l'invention un bruit de 0,2 kPa seulement alors qu avec un dispositif analogue ne comportant de douille 12, le bruit mesuré était de 0,7 kPa. On constate donc que pour une distance D égale seulement à environ vingt fois le diamètre du gicleur d'admission, on obtient d'excellents résultats pour la mesure. En pratique, on a constaté que l'on pouvait encore diminuer la distance D jusqu'à environ dix fois le diamètre du gicleur d'admission, la distance d étant de l'ordre de 2 à 5 fois le diamètre du gicleur d'admission, de préférence environ 3 fois le diamètre du gicleur d'admission.

Bien entendu l'invention n'est pas limitée au mode de réalisation décrit et on peut y apporter des variantes de réalisation sans sortir du cadre de l'invention. En particulier, on peut prévoir une cloison séparatrice fixe à l'intérieur de la chambre de mesure. On peut également prévoir une cloison séparatrice ayant toute forme adaptée à la forme de la chambre de mesure pourvu qu'elle soit disposée par rapport à la prise de pression pour diminuer les turbulences résultant de l'écoulement du gaz dans la chambre de mesure.

## Revendications

1. Dispositif de mesure pneumatique comportant au moins une chambre de mesure (4) alimentée en gaz sous pression par l'intermédiaire d'un gicleur d'alimentation (5), cette chambre de mesure ayant une buse de sortie (7,9) espacée du gicleur d'alimentation (5) et comprenant une prise de pression (10) disposée entre le gicleur d'alimentation (5) et la buse de sortie (7,9) sur une paroi de la chambre de mesure s'étendant sensiblement parallèlement à une direction d'écoulement du gaz dans la chambre de mesure caractérisé en ce qu'il comporte une cloison séparatrice (12) s'étendant à l'intérieur de la chambre de mesure (4) en regard de la prise de pression (10) et déterminant avec la paroi de la chambre de mesure un volume (13) fermé de façon étanche du côté de la buse de sortie et ouvert du côté du gicleur d'admission à proximité de celui-ci.

2. Dispositif de mesure pneumatique selon la revendication 1, caractérisé en ce que la chambre de mesure (4) est cylindrique et en ce que la cloison séparatrice (12) est tubulaire et délimite un volume annulaire (13).

## Patentansprüche

1. Pneumatische Meßvorrichtung, umfassend mindestens eine Meßkammer (4), der mittels einer Eintrittsdüse (5) ein Druckgas zugeführt wird, wobei diese Meßkammer in einem Abstand von der Eintrittsdüse (5) eine Austrittsdüse (7, 9) hat und eine Druckabgriffstelle (10) umfaßt, die zwischen der Eintrittsdüse (5) und der Austrittsdüse (7, 9) an einer Wand der Meßkammer angeordnet ist, die sich im wesentlichen parallel zu einer Strömungsrichtung des Gases in der Meßkammer erstreckt, dadurch **gekennzeichnet,** daß sie eine Trennwand (12) hat, die sich innerhalb der Meßkammer (4) gegenüber der Druckabgriffstelle (10) erstreckt und mit der Wand der Meßkammer ein Volumen bildet, das auf der Seite der Austrittsdüse dicht abgeschlossen und auf der Seite der Eintrittsdüse nahe derselben offen ist.

2. Pneumatische Meßvorrichtung nach Anspruch 1, dadurch **ge****kennzeichnet**, daß die Meßkammer (4) zylindrisch ist und daß die Trennwand (12) rohrförmig ist und ein Ringvolumen (13) begrenzt.

## Claims

1. Pneumatic measurement apparatus comprising at least one measurement chamber (4) fed with gas under pressure by a feed nozzle (5), said measurement chamber having an outlet nozzle (7, 9) spaced apart from the feed nozzle (5) and including a pressure take-off point (10) disposed between the feed nozzle (5) and the outlet nozzle (7, 9) and passing through a wall of the measurement chamber, which wall extends substantially parallel to the flow direction of the gas inside the measurement chamber, the apparatus being characterized in that it includes a separating partition (12) extending inside the measurement chamber (4) overlying the pressure take-off point (10) and co-operating with the wall of the measurement chamber to determine a volume (13) which is closed in airtight manner at its outlet nozzle end and which is open at its inlet nozzle end in the vicinity of the inlet nozzle.

2. Pneumatic measurement apparatus according to claim 1, characterized in that the measurement chamber (4) is cylindrical and in that the separating partition (12) is tubular and delimits an annular volume (13).
